**Europäisches Patentamt**

**European Patent Office**

**Office européen des brevets**

(19)

(11) Publication number : **0 519 097 B1**

(12) # EUROPEAN PATENT SPECIFICATION

(45) Date of publication of patent specification :
**16.03.94 Bulletin 94/11**

(51) Int. Cl.[5] : **C08F 212/04,** C08F 220/32

(21) Application number : **91110051.9**

(22) Date of filing : **19.06.91**

(54) **Process for the preparation of copolymers with units derived from glycidyl esters or glycidylethers.**

(43) Date of publication of application :
**23.12.92 Bulletin 92/52**

(45) Publication of the grant of the patent :
**16.03.94 Bulletin 94/11**

(84) Designated Contracting States :
**DE ES FR GB IT NL**

(56) References cited :
**EP-A- 0 342 793**
**DE-A- 3 427 441**
**US-A- 2 580 901**

(73) Proprietor : **GE Plastics ABS Europe B.V.**
**Cyprusweg 2**
**NL-1044 AA Amsterdam (NL)**

(72) Inventor : **Loibl, Marc, General Plastics ABS S.A.**
**B.P. 1**
**F-60134 Villers Saint-Sepulcre (FR)**
Inventor : **Vanderheeren, Michel, General Plastics ABS S.A.**
**B.P. 1**
**F-60134 Villers Saint-Sepulcre (FR)**

(74) Representative : **Pratt, Richard Wilson**
**London Patent Operation G.E. Technical Services Co. Inc. Essex House 12/13 Essex Street**
**London WC2R 3AA (GB)**

## Description

The invention relates to a process for the preparation of copolymers, whereby 50-100 parts by weight of an aromatic vinyl compound, 0,1-15 parts by weight of a glycidyl ester of an unsaturated carboxylic acid or an glycidyl vinyl ether, 0-50 parts by weight of a cyanated vinyl compound, and 0-100 parts by weight of other vinyl monomers are copolymerized in emulsion or suspension,

Copolymers with units derived from glycidyl esters of unsaturated carboxylic acid are widely known. They are used inter alia as an agent to mattify thermoplastic compositions.

The invention deals with an improved process for the preparation of such known copolymers. It has been found that the content of epoxy groups, derived from the glycidyl ester, in the copolymer can be controlled better and can be higher for the same amount of used glycidyl ester by performing the reaction at a controlled pH-value.

The process according to the invention is characterised in that the process is carried out at a pH which is kept at a value between 6 and 8 during the copolymerisation reaction.

It is possible to perform the copolymerization reaction in the presence of an elastomer. Suitable elastomers are polybutadiene elastomers, polybutadiene-styrene elastomers, poly (butadiene-acrylonitrile) elastomers, poly(butadiene-acrylic or methacrylic ester) elastomers and poly-acrylic ester elastomers.

A suitable way to control the pH at a value between 6 and 8 is adding a buffer.

It has been found that the degree of polymerization can be regulated by varying the relative amounts of cyanated vinyl compound, while keeping reaction conditions and the amounts of initiation system used constant.

Once the copolymerization has been terminated it is preferred to coagulate the copolymer at a pH of 7-9 and to wash it subsequently at a pH above 5. The coagulation can be performed by adding an aqueous $CaCl_2$ solution.

The copolymer is prepared by using various starting monomers, i.e. an aromatic vinyl compound and a glycidyl ester of an unsaturated carboxylic acid or a glycidyl vinyl ether. It is possible to use further monomers in the preparation of the copolymer i.e. a cyanated vinyl compound and other vinyl monomers.

Suitable aromatic vinyl compounds are styrene, alpha-methyl styrene, styrene compounds substituted in the aromatic nucleus, like 3-alkyl-1-vinyl benzene and 4-alkyl-1-vinyl benzene.

Suitable glycidyl esters are e.g. glycidyl methacrylate, glycidyl acrylate. Also suitable are glycidyl alkyl vinyl ethers.

Cyanated vinyl monomers which may be used in the preparation of the copolymers according to the invention are e.g. acrylonitrile and methacrylonitrile.

Suitable vinyl monomers are acrylic or methacrylic acids and their esters.

As stated above the copolymerisation reaction can be performed in the presence of an elastomer. This may result in the occurrence of some grafting of the monomers upon the elastomers.

The copolymerisation reaction may be performed in emulsion or suspension.

The invention is illustrated by means of the following examples.

EXAMPLE I

A series of ten reactions was performed while using styrene as the aromatic vinyl compound, glycidyl methacrylate as the glycidyl acrylic ester (reactions 1,2 and 3) and by adding acrylonitrile as a cyanated vinyl compound (reactions 4,5,6,7) and methyl methacrylate or methyl acrylate as another acrylic monomer (reactions 8,9 and 10). For all reactions see also Table 1.

The monomers as indicated in the following Table 1 were gradually added, in three hours, in the relative quantities as indicated, into a reactor filled with 220 parts by weight of water (with respect to 100 parts by weight of monomers), 1,1 parts by weight sodium dodecyl sulfate, 0,044 parts by weight $Na_2S_2O_5$, 0,25 parts by weight of potassium persulfate and 0,42 parts by weight of a buffer ($Na_3PO_4$ or $K_2CO_3$ as indicated in Table 1). In comparative reactions 3, 7 and 10 no buffer was added.

Prior to the addition of the monomers the temperature in the reactor had been raised to 70°C and 1 bar of nitrogen pressure (equivalent to 100 kPa) had been introduced in the gaseous part of the reactor.

During the addition and 3 hours thereafter the reaction mixture was continuously stirred and kept at 70°C.

At the end of the reaction the pH was measured (see Table 1) as well.

After completion of the reactions, the obtained copolymers were coagulated into a 10% aqueous solution of $CaCl_2$ (at 95°C) and at controlled pH between 7 and 9. The coagulated copolymers were then centrifuged and washed at pH above 5. Finally the copolymers were dried in a bead dryer at 80°C.

The epoxy content of the obtained copolymers were determined by dissolving/dispersing the copolymer in dimethylformamide, by treating the obtained solution/dispersion with a premeasured amount of concentrated HCl solution. The excess of the HCl, not reacted with the epoxy groups, was then determined by titration with a o,1N NaOH solution in methanol (indicator: bromophenyl blue). This has been converted into content of glycidyl methacrylate in the copolymer. This content has been indicated in Table 1 also.

As can be seen from Table 1, the control of the pH during the copolymerisation reaction results in an almost complete incorporation of the added glycidyl methacrylate (GMA) into the obtained copolymer. If no pH control is used (reaction numbers 3, 7 and 10) the content of incorporated GMA is lower as expected from the composition of the mixture of monomers.

EP 0 519 097 B1

Table 1

Experiments with different compositions and

at different reaction pH

| Reaction no | Monomers used | Monomer composition (parts) | Buffer solution | Final pH of the polymer (Latex) | Buffer applied in copolymeri- zation reaction | Amount of GMA found in the resin (%) |
|---|---|---|---|---|---|---|
| 1 | St[1]/GMA[2] | 100/1 | yes | 7,55 | $K_2CO_3$ | 1,2 |
| 2 | St/GMA | 92/8 | yes | 8,9 | $Na_3PO_4$ | 7,62 |
| 3 | St/GMA | 92/8 | no | 2,5 | - | 4,9 |
| 4 | St/AN[3]/GMA | 76/24/1 | yes | 7,5 | $Na_3PO_4$ | 1,04 |
| 5 | ST/AN/GMA | 85/15/1 | yes | 7,1 | $Na_3PO_4$ | 1,3 |
| 6 | St/AN/GMA | 85/15/8 | yes | 7,5 | $Na_3PO_4$ | 7,92 |
| 7 | St/AN/GMA | 85/15/8 | no | 2,1 | - | 6,33 |
| 8 | MMA[4]/MA[5]/GMA | 97/3/1 | yes | 7,3 | $Na_3PO_4$ | 1,5 |
| 9 | MMA/GMA | 92/8 | yes | 7,2 | $Na_3PO_4$ | 8,8 |
| 10 | MMA/GMA | 92/8 | no | 3,6 | - | 5,7 |

(1) Styrene - (2) Glycidyl Methacrylate - (3) Acrylonitrile - (4) Methyl Methacrylate - (5) Methyl Acrylate

EXAMPLE II

This example serves to show the possibility to control the molecular weight of the copolymer by changing the relative amounts of cyanated vinyl compound.

The following compounds were charged into a reactor equipped with a stirrer and pressure closure:

$H_2O$     - 220 parts
$Na_2S_2O_5$   - 0,044 part
$Na_3PO_4$   - 0,42 part

Temperature of the above mixture in the reactor was raised to 70°C and 1 bar of nitrogen pressure (100 kPa) was introduced into the gaseous part of the reactor. Monomer mixture, shown in Table 2, was added to the reactor over 3 hours (by a pumping system) under continuous stirring, and then stirring was continued for another 3 hours at 70°C, until completion of the process. The pH of the process was kept between 6 and 8 by the sodium phosphate.

## Table 2
### Examples

| Composition-monomer mixture (parts by weight) | A-1 | A-2 | A-3 | A-4 |
|---|---|---|---|---|
| Styrene | 100 | 85 | 76 | 70 |
| Acrylonitrile | 0 | 15 | 24 | 30 |
| GMA (*) | 1 | 1 | 1 | 1 |
| TDM (*) | 0,2 | 0,2 | 0,2 | 0,2 |
| Mol.wt (Mw) 10-4 | 17.58 | 27.12 | 41.44 | 46.42 |
| Mol.wt (Mn) 10-4 | 7.45 | 9.88 | 12.49 | 11.62 |
| Mw/Mn | 2.35 | 2.74 | 3.31 | 3.99 |
| Solution Viscosity (g/dl) | 0.39 | 0.70 | 0.85 | 1.13 |

(*) GMA - Glydicyl methacrylate
TDM - Tertiary dodecyl mercaptane

Respective copolymers (A) Table 2) were, after completion of the reaction, coagulated in 10% water solution of $CaCl_2$ at 95°C, and at controlled pH = 7-9. The copolymer was then centrifugated and washed at pH higher than 5. Finally, drying operation of the copolymer was carried out in a bead dryer at 80°C.

Mol. weights, mol. weight distribution and intrinsic viscosity of the copolymers of the above described experiments are shown in Table 2 also. From the results can be seen that there is a direct relationship between the relative amount of acrylonitrile and the molecular weight and the molecular weight distribution.

**Claims**

1. Process for the preparation of copolymers, whereby 50-100 parts by weight of an aromatic vinyl compound, 0,1-15 parts by weight of a glycidyl ester of an unsaturated carboxylic acid or a glycidyl vinyl ether, 0-50 parts by weight of a cyanated vinyl compound, and 0-100 parts by weight of other vinyl monomers are copolymerized in emulsion or suspension, wherein the process is carried out at a pH which is kept at a value between 6 and 8 during the copolymerisation reaction.

2. Process according to claim 1, wherein the copolymerisation reaction is carried out in the presence of an elastomer.

EP 0 519 097 B1

3. Process according to claim 1, wherein the copolymerisation reaction is carried out in the presence of a polybutadiene elastomer, a polybutadienstyrene elastomer, a poly (butadiene-acrylonitrile) elastomer, a poly (butadiene-acrylic or methacrylic ester) elastomer or a poly-acrylic ester elastomer.

4. Process according to claim 1, wherein the pH is controlled by adding a buffer.

5. Process according to claim 1, wherein the degree of polymerisation is regulated by varying the relative amounts of cyanated vinyl compound while keeping reaction conditions and the amounts of initiation system used constant.

6. Process according to claim 1, wherein the formed copolymer is coagulated at a pH of 7-9 and is subsequently washed at a pH above 5.

7. Process according to claim 6, wherein the formed copolymer is coagulated by adding an aqueous $CaCl_2$ solution.

## Patentansprüche

1. Verfahren zur Herstellung von Copolymeren, bei dem 50 - 100 Gewichtsteile einer aromatischen Vinylverbindung, 0,1 - 15 Gewichtsteile eines Glycidylesters einer ungesättigten Carbonsäure oder eines Glycidyl-Vinyläthers, 0 - 50 Gewichtsteile einer cyanierten Vinylverbindung und 0 - 100 Gewichtsteile anderer Vinylmonomeren in Emulsion oder Suspension copolymerisiert werden, wobei das Verfahren bei einem pH-Wert durchgeführt wird, der während der Copolymerisationsreaktion auf einem Wert zwischen 6 und 8 gehalten wird.

2. Verfahren nach Anspruch 1, bei dem die Copolymerisation in Anwesenheit eines Elastomeren durchgeführt wird.

3. Verfahren nach Anspruch 1, bei dem die Copolymerisationsreaktion in Anwesenheit eines Polybutadienelastomeren, eines Polybutadienstyrolelastomeren, eines Poly(butadienacrylnitril)-Elastomeren, eines Poly(butadienacrylsäure- oder methacrylsäureester)-Elastomeren oder einem Poly-Acrylsäureesterelastomeren durchgeführt wird.

4. Verfahren nach Anspruch 1, bei dem der pH-Wert durch Zugabe einer Puffersubstanz gesteuert wird.

5. Verfahren nach Anspruch 1, bei dem der Polymerisationsgrad durch Veränderung der relativen Mengen der cyanierten Vinylverbindung geregelt wird, wobei die Reaktionsbedingungen und die Menge des verwendeten Initiierungssystems konstant gehalten werden.

6. Verfahren nach Anspruch 1, bei dem das gebildete Copolymer bei einem pH-Wert von 7 - 9 koaguliert und anschließend bei einem pH-Wert über 5 gewaschen wird.

7. Verfahren nach Anspruch 6, bei dem das gebildete Copolymer durch Zugabe einer wäßrigen $CaCl_2$-Lösung koaguliert wird.

## Revendications

1. Procédé de préparation de copolymères, dans lequel on fait copolymériser, en émulsion ou en suspension, 50 à 100 parties en poids d'un composé vinyl-aromatique, 0,1 à 15 parties en poids d'un ester glycidylique d'un acide carboxylique insaturé ou d'un éther vinylique de glycidyle, 0 à 50 parties en poids d'un composé cyanovinylique, et 0 à 100 parties en poids d'autres monomères vinyliques, ledit procédé étant mis en oeuvre à un pH que l'on maintient à une valeur située entre 6 et 8 pendant la réaction de copolymérisation.

2. Procédé conforme à la revendication 1, dans lequel on effectue la réaction de copolymérisation en présence d'un élastomère.

3. Procédé conforme à la revendication 1, dans lequel on effectue la réaction de copolymérisation en présence d'un élastomère polybutadiène, d'un élastomère poly(butadiène-styrène), d'un élastomère

6

poly(butadiène-acrylonitrile), d'un élastomère poly(butadiène-acrylate ou méthacrylate), ou d'un élastomère polyacrylate.

4. Procédé conforme à la revendication 1, dans lequel on règle le pH en ajoutant un agent tampon.

5. Procédé conforme à la revendication 1, dans lequel on ajuste le degré de polymérisation en faisant varier la proportion de composé cyanovinylique, tout en maintenant constantes les conditions de réaction et la quantité de système amorceur utilisée.

6. Procédé conforme à la revendication 1, dans lequel on fait coaguler le copolymère formé, à un pH de 7 à 9, et on le lave ensuite à un pH supérieur à 5.

7. Procédé conforme à la revendication 6, dans lequel on fait coaguler le copolymère formé, en ajoutant une solution aqueuse de $CaCl_2$.